Europäisches Patentamt

(19) European Patent Office

Office européen des brevets

(11) Numéro de publication : **0 300 905 B1**

(12) **FASCICULE DE BREVET EUROPEEN**

(45) Date de publication du fascicule du brevet :
**10.07.91 Bulletin 91/28**

(51) Int. Cl.⁵ : **F16H 37/08, F16H 57/12**

(21) Numéro de dépôt : **88401885.4**

(22) Date de dépôt : **20.07.88**

(54) **Réducteur à arbres parallèles ou orthogonaux à couple divisé et rattrapage de jeux.**

(30) Priorité : **22.07.87 FR 8710396**

(43) Date de publication de la demande :
**25.01.89 Bulletin 89/04**

(45) Mention de la délivrance du brevet :
**10.07.91 Bulletin 91/28**

(84) Etats contractants désignés :
**AT DE ES GB IT**

(56) Documents cités :
**EP-A- 0 042 480**
**DE-A- 2 211 619**
**DE-A- 2 420 232**
**FR-A- 2 355 215**

(73) Titulaire : **ENGRENAGES ET REDUCTEURS CITROEN - MESSIAN - DURAND Société Anonyme**
**3, rue Latécoère B.P. 43**
**F-78142 Velizy-Villacoublay Cédex (FR)**

(72) Inventeur : **Bluzat, Jean-Pierre**
**15 rue Léon Blum**
**F-58640 Varennes Vauzelles (FR)**
Inventeur : **Millard, Jean-Claude**
**12 rue Creuse**
**F-58000 Nevers (FR)**
Inventeur : **Piechocki, Gérard**
**76 Avenue Pasteur**
**F-78630 Orgeval (FR)**

(74) Mandataire : **Lanceplaine, Jean-Claude et al**
**CABINET LAVOIX 2, Place d'Estienne d'Orves**
**F-75441 Paris Cédex 09 (FR)**

EP 0 300 905 B1

## Description

La présente invention se rapporte à un réducteur à arbres parallèles ou orthogonaux à couple divisé et rattrapage de jeux.

La réduction maximum de l'encombrement des équipements a conduit de nombreux constructeurs de transmissions mécaniques à concevoir des réducteurs à couple divisé. En effet, chaque fois que des couples importants doivent être transmis et que l'on dispose d'un encombrement réduit, il est intéressant de diviser la puissance de la machine motrice sur différents flux d'efforts se regroupant en fin de chaîne cinématique sur le même organe de sortie.

Ce concept exige la division de la puissance totale transmise à l'organe de sortie finale par le nombre d'organes engrénant avec ledit organe de sortie, à l'aide de dispositifs mécaniques divers qui réalisent cette division de puissance avec une exactitude qui dépend de plusieurs paramètres liés à la construction des organes de division tels que, par exemple leur masse, leur position dans la chaîne cinématique, les frottements engendrés en fonctionnement, etc...

Dans ces types de matériel, le nombre d'organes entraînant la même roue dentée finale est en général de deux dans les systèmes conventionnels et de trois dans les systèmes à planétaire.

On connaît dans le FR-A-971 083, un dispositif d'élimination du jeu dans un train d'engrenages, dans lequel le train d'engrenages comporte deux trains de pignons parallèles pour former une chaîne cyclique renfermant le pignon d'entraînement et le pignon mené, l'un de ces pignons étant muni d'organes permettant de le déplacer dans son ensemble pour compenser le jeu présent dans ce train.

On connaît également dans le FR-2 221 981 un dispositif d'entraînement et à rattrapage de jeux, comportant deux organes moteurs à sens de rotation opposés, un organe récepteur et des moyens de rattrapage de jeux constitués par deux pignons moteurs solidaires en rotation respectivement des deux organes moteurs, chacun de ces pignons moteurs étant en prise avec une couronne dentée provoquant la rotation de l'organe récepteur, un pignon intermédiaire en prise avec les deux pignons moteurs et monté fou sur un arbre mobile en translation, et des moyens pour soumettre l'arbre mobile du pignon intermédiaire à une force s'exerçant perpendiculairement audit arbre.

On connaît encore dans le EP-A-42 480 un réducteur à couple divisé et avec équilibrage des couples comportant un arbre moteur d'entrée unique et une roue de sortie dentée à basse vitesse montée sur un arbre de sortie parallèle audit arbre d'entrée et entraînée par des systèmes de divison de puissance. Les systèmes de division de puissance comprennent des engrenages disposés dans un carter principal et en prise avec ladite roue de sortie.

Enfin, on connaît dans le DE-A-2 420 232 un réducteur dans lequel un mécanisme à planétaire est utilisé pour diviser le couple d'un arbre moteur d'entrée.

L'objet de l'invention est de fournir un dispositif qui est particulièrement compact et procure une grande réduction et un bon rendement mécanique pour l'entraînement d'un organe de sortie par plusieurs organes distincts engrénant avec ledit organe de sortie.

Suivant l'invention, le réducteur à couple divisé et avec équilibrage des couples comportant un arbre moteur d'entrée unique et une roue de sortie dentée à basse vitesse montée sur un arbre de sortie parallèle ou orthogonal audit arbre d'entrée et entraînée par des systèmes de division de puissance, lesdits systèmes comprenant des engrenages avec quatre pignons disposés dans un carter principal et en prise avec ladite roue de sortie est caractérisé en ce que les quatre pignons sont en prise perpétuelle avec ladite roue de sortie, les engrenages et les quatre pignons sont divisés en deux groupes identiques avec deux pignons desdits quatre pignons, l'un des deux pignons de chaque groupe étant entraîné par un porte-satellites d'un mécanisme à planétaire et l'autre desdits deux pignons étant entraîné par une couronne dentée dudit mécanisme à planétaire par l'intermédiaire d'une roue dentée ce qui constitue un premier desdits systèmes de division de puissance, chacun desdits mécanismes à planétaire comportant un pignon solaire solidaire d'un arbre intermédiaire relié chacun à l'arbre moteur d'entrée unique par un second desdits systèmes de division de puissance.

Selon une autre caractéristique de l'invention, l'arbre moteur d'entrée est libre axialement et comporte un mécanisme de freinage avec rattrapage des jeux et mise sous précontrainte de l'ensemble des engrenages du réducteur.

Selon encore une autre caractéristique de l'invention, l'arbre moteur d'entrée est libre axialement et comporte un mécanisme à fonctionnement momentané ou continu avec rattrapage des jeux et mise sous précontrainte de l'ensemble des engrenages du réducteur.

L'invention sera mieux comprise à l'aide de la description qui va suivre, donnée uniquement à titre d'exemple et faite en se référant aux dessins annexés, sur lesquels :

— la Fig. 1 est une vue en élévation du réducteur conforme à l'invention, pour la configuration des arbres d'entrée et de sortie parallèles,

— la Fig. 2 est une vue à plus grande échelle et en coupe selon la ligne 2-2 de la Fig. 1,

— la Fig. 3 est une vue partielle d'une variante de la Fig. 2,

— la Fig 4 est une vue à plus grande échelle et en coupe selon la ligne 4-4 de la Fig. 1,

— la Fig 5 est une vue en élévation du réducteur conforme à l'invention, pour la configuration des arbres d'entrée et de sortie perpendiculaires,

– la Fig. 6 est une vue à plus grande échelle et en coupe selon la ligne 6-6 de la Fig. 5,

– la Fig. 7 est une vue à plus grande échelle et en coupe selon la ligne 7-7 de la Fig. 6,

– les Fig. 8, 9 et 10 sont trois vues en coupe axiale de trois variantes de mécanismes de freinage et rattrapage des jeux monté sur l'arbre d'entrée du réducteur conforme à l'invention,

– les Fig. 11 et 12 sont des vues schématiques montrant le fonctionnement des systèmes de dédoublement de puissance de l'arbre moteur unique sur les deux arbres intermédiaires avec rattrapage de jeu,

– les Fig. 13 et 14 représentent différents diagrammes de fonctionnement montrant les variations de certains paramètres liées aux dentures des engrenages en fonction des couples transmis par la couronne basse vitesse, selon l'invention et selon les FR-A-971 083 et FR-A-2 221 981.

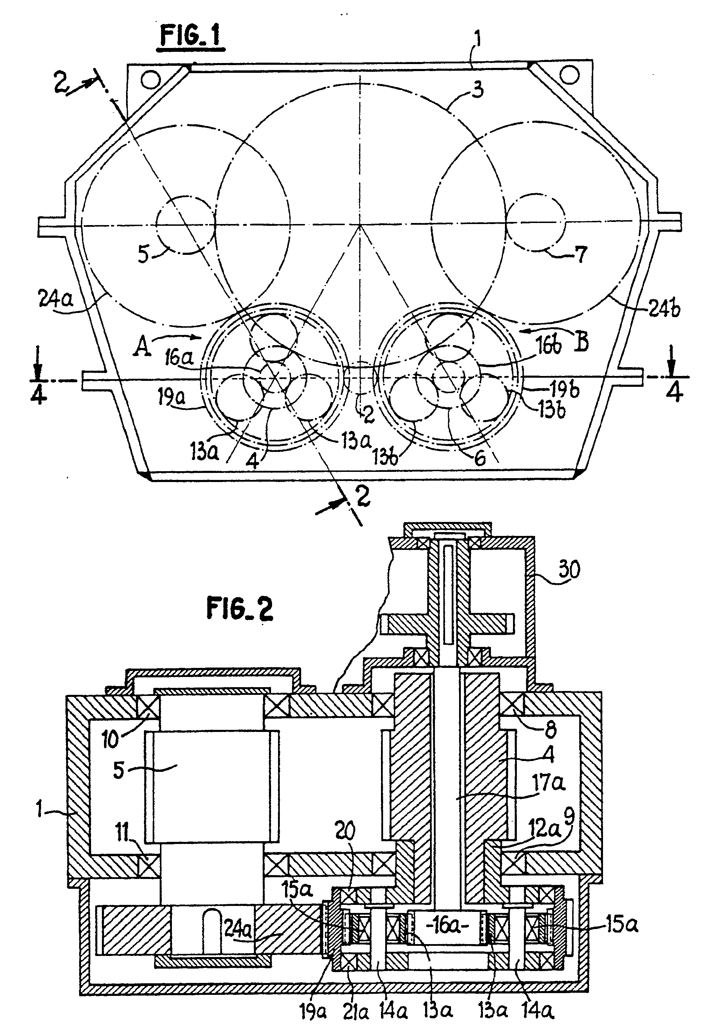

En se reportant aux Figs. 1, 2 et 4, on voit que le réducteur comporte un carter principal 1 sur lequel est centré et fixé un carter primaire 30 dans lequel débouche un arbre moteur d'entrée unique 2 accouplé en rotation, par exemple, à un moteur d'entraînement, non représenté, ou à tout autre réducteur primaire.

Le carter principal 1 contient également une roue dentée de sortie 3 basse vitesse droite ou hélicoïdale qui entraîne en rotation un arbre de sortie parallèle à l'arbre moteur d'entrée 2.

La roue dentée basse vitesse 3 qui tourillonne à l'aide de deux paliers, non représentés, dans le carter principal 1, engrène avec deux pignons 4 et 5 d'un premier mécanisme A et avec deux pignons 6 et 7 d'un second mécanisme B.

Les deux mécanismes A et B sont symétriques et en se reportant à la Fig. 2, on va décrire plus en détail le mécanisme A.

Les pignons 4 et 5 ont un même nombre de dents et tourillonnent dans le carter principal 1 par l'intermédiaire de deux paliers respectivement 8, 9 et 10, 11. Sur la queue du pignon 4 est fixé un porte-satellites 12a d'un mécanisme à planétaire sur lequel sont montés les satellites 13a par l'intermédiaire des axes de satellites 14a et des roulements 15a interposés entre lesdits axes 14a et lesdits satellites 13a.

Les satellites 13a engrènent, d'une part, avec un pignon solaire 16a fixé à l'extrémité d'un arbre intermédiaire 17a qui traverse coaxialement le pignon 4a et, d'autre part, avec une denture intérieure d'une couronne 19a qui comporte également une denture extérieure.

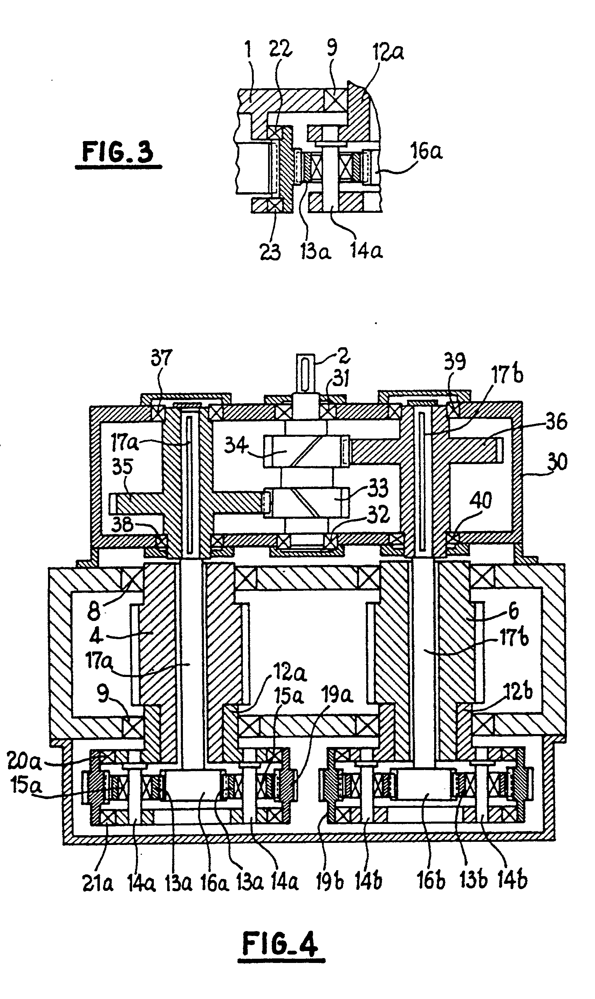

Sur la Fig. 2, la couronne dentée 19a tourillonne sur le porte-satellites 12a par l'intermédiaire des roulements 20a et 21a. Par contre, dans la variante de la Fig. 3, la couronne dentée 19a tourillonne sur un alésage fixe du carter principal 1 par l'intermédiaire des roulements 22 et 23.

La denture extérieure de la couronne dentée 19a engrène avec une roue dentée 24a clavetée sur la queue du pignon 5 qui engrène également avec la roue dentée basse vitesse 3.

Le mécanisme à planétaire du système B est identique et comporte les mêmes éléments désignés par la référence "b" (Fig. 4).

On voit donc que dans cette disposition où l'arbre d'entrée et l'arbre de sortie sont parallèles, les deux arbres intermédiaires 17a et 17b sont situés dans le même plan de joint du carter principal 1 (Fig. 1).

Le dédoublement de la puissance de l'arbre intermédiaire 17a sur les deux pignons 4 et 5 est obtenu de la façon suivante.

Il est connu que la relation entre les couples appliqués de l'extérieur sur les trois membres d'un planétaire constitués par le pignon solaire 16a, le porte-satellites 12a et le couronne dentée 19a, est absolument indépendante de la vitesse et ne dépend que du rapport des engrenages constituant le planétaire.

Cette relation des couples entre le porte-satellites 12a et la couronne dentée 19a étant un rapport constant, il suffit d'obtenir un rapport de nombre de dents entre la denture extérieure de ladite couronne dentée 19a et la roue dentée 24a qui soit l'inverse du rapport des couples entre le porte-satellites 12a et la couronne dentée 19a, de manière à obtenir le produit de ces deux rapports égal ou voisin de l'unité, ce qui permet d'obtenir l'égalisation des couples transmis par le porte-satellites 12a et la couronne dentée 19a et donc aussi sur les pignons 4 et 5.

Si le produit indiqué ci-dessus est différent de l'unité, il représente le rapport constant des couples transmis sur les pignons 4 et 5. Ce dernier cas peut être utilisé lorsque, par exemple, la construction exige des nombres de dents différents entre les pignons 4 et 5. Pour conserver des efforts tangentiels égaux, par exemple sur les pignons 4 et 5, le nombre de dents et les diamètres primitifs étant différents, par conséquent pour un même effort tangentiel transmis sur les dentures des pignons 4 et 5, les couples sur les pignons 4 et 5 devront être proportionnels au nombre de dents sur lesdits pignons, donc différents.

En plus du dédoublement de la puissance de chaque arbre intermédiaire 17a et 17b sur deux pignons, le réducteur comporte des moyens pour dédoubler la puissance de l'arbre moteur unique 2 sur les deux arbres intermédiaires.

A cet effet, l'arbre moteur unique 2 est monté sur deux paliers 31 et 32 ne comportant aucune butée axiale, si bien que l'arbre 2 est libre axialement.

Sur cet arbre moteur 2 sont montés un pignon 33 possédant une denture à hélice à gauche et un pignon 34 possédant une denture à hélice à droite.

Le pignon 33 engrène avec une roue à denture hélicoïdale 35 entraînant l'arbre intermédiaire 17a, par exemple par clavetage ou par tout autre moyen, tandis que le pignon 34 engrène avec une roue à denture hélicoïdale 36 entraînant l'arbre intermédiaire 17b, par exemple par clavetage ou par tout autre moyen. Les roues 35 et 36 ont une denture hélicoïdale identique sauf en ce qui concerne leur sens d'hélice de denture, la roue 35 étant taillée avec une hélice à droite, et la roue 36 avec une hélice à gauche. Les deux roues 35 et 36 tourillonnent à l'intérieur du carter primaire 30 par l'intermédiaire respectivement des paliers 37, 38 et 39, 40.

En fonctionnement sous couple, le contact des dentures du pignon 33 sur la roue 35 et du pignon 34 sur la roue 36 produit des composantes axiales opposées à cause des sens d'hélice opposés. L'équilibre axial de l'arbre moteur 2 supportant les pignons 33 et 34 n'est réalisé que lorsque les composantes axiales sont égales et opposées et donc les couples transmis sur les roues 35 et 36 sont égaux.

La puissance totale transmise au réducteur par l'arbre moteur unique 2 est donc une première fois dédoublée sur les deux arbres intermédiaires 17a et 17b par les pignons 33, 34 et les roues 35, 36. Chaque arbre intermédiaire 17a et 17b entraîne un groupe de deux pignons 4, 5 et 6, 7 par un mécanisme à planétaire qui dédouble une deuxième fois la puissance des arbres intermédiaires, chaque groupe de deux pignons 4, 5 et 6, 7 entraînant la roue dentée basse vitesse 3.

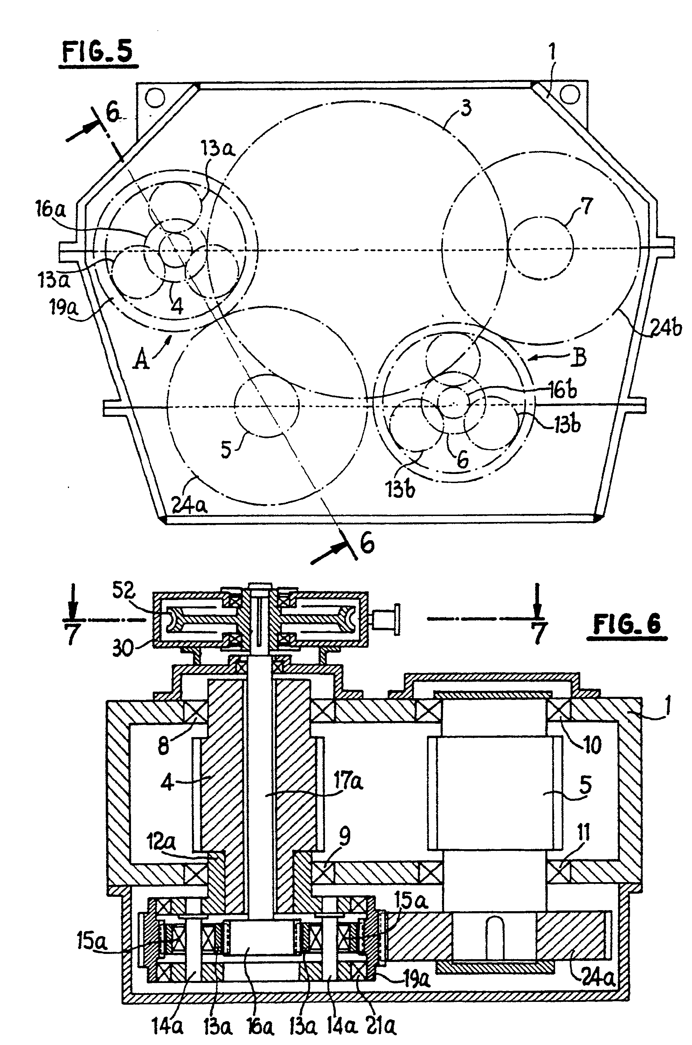

En se reportant maintenant aux Fig. 5 à 7, on va décrire le réducteur dans le cas où l'arbre moteur unique 2 est perpendiculaire à l'arbre de sortie, c'est-à-dire à l'axe de la roue basse vitesse 3. Les éléments identiques au mode de réalisation précédent sont désignés par les mêmes références.

Dans ce mode de réalisation, la position des mécanismes à planétaire est inversée et les arbres intermédiaires 17a et 17b sont situés dans deux plans de joint différents du carter principal 1.

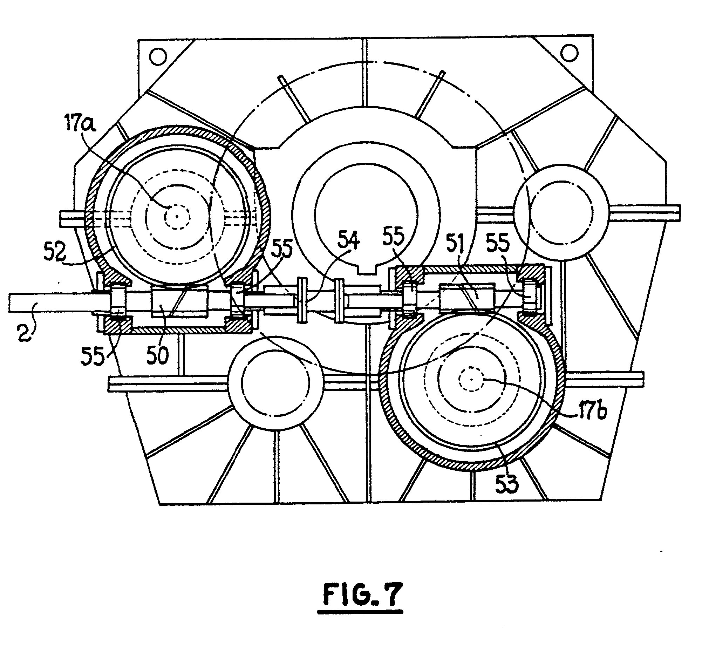

Sur l'arbre moteur unique 2 sont montés deux vis sans fin 50 et 51 dont le sens des hélices de taillage est opposé (Fig. 7). La vis sans fin 50 a une hélice à droite et engrène avec une roue tangente 52 solidaire de l'arbre intermédiaire 17a, tandis que la vis sans fin 51 a une hélice à gauche et engrène avec une roue tangente 53 solidaire de l'arbre intermédiaire 17b.

Les deux vis sans fin 50, 51 qui constituent l'arbre moteur unique 2 sont reliées entre elles par un accouplement rigide 54, et sont montées sur des paliers libres axialement.

Le principe d'égalisation des couples transmis sur les deux roues tangentes 52 et 53 entraînant les arbres intermédiaires 17a et 17b est donc le même que celui décrit précédemment.

Par ailleurs, le freinage des réducteurs à grand rapport de réduction qui n'est généralement réalisé que par l'action d'un frein situé sur l'arbre grande vitesse, présente l'inconvénient de ne pas bloquer parfaitement l'arbre basse vitesse à cause des jeux à l'engrènement sur les différents trains d'engrenage qui se cumulent sur l'arbre petite vitesse, ce qui permet des oscillations angulaires de l'arbre petite vitesse. Ces oscillations peuvent, sur certains matériels, être amplifiées par la présence de pulsations vibratoires générées par la machine entraînée et provoquer une destruction rapide du matériel.

Il est évident que le freinage direct sur l'arbre basse vitesse est, soit impossible, soit d'un prix excessif à cause des efforts importants mis en oeuvre.

Le réducteur conforme à l'invention, avec un arbre moteur unique libre axialement, permet, par un système qui lui est associé et qui va maintenant être exposé, d'obtenir soit un freinage avec rattrapage total des jeux angulaires des engrenages avec mise sous précontrainte desdits engrenages, soit un fonctionnement momentané ou continu avec rattrapage des jeux et également mise sous précontrainte.

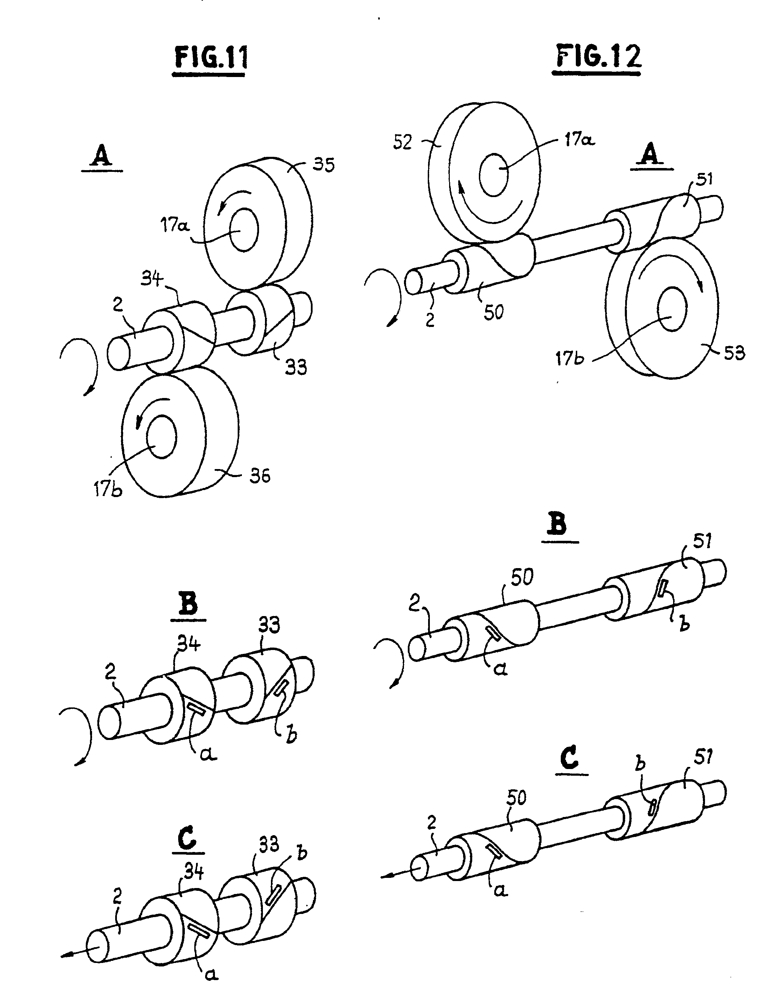

En examinant le fonctionnement des systèmes de dédoublement de puissance de l'arbre moteur unique 2 sur les deux arbres intermédiaires 17a et 17b (Fig. 11 et 12) on constate que les engrenages entraînés tournent dans le même sens, donc que les mêmes familles de flancs de dents sont en contact jusqu'à la roue basse vitesse (Fig. 11B et 12B). Sur ces Figures, les petits rectangles a et b situés à droite ou à gauche de la ligne figurant l'hélice, représentent les dents des engrenages entraînant les arbres intermédiaires dans les différents cas de fonctionnement.

S'il est appliqué une charge axiale de traction ou de compression sur l'arbre moteur unique 2, on constate que les engrenages (34, 36 et 33, 35 ou 50, 52 et 51, 53) qui entraînent les arbres intermédiaires 17a et 17b viennent en contact, l'un sur les mêmes flancs que nous appellerons flancs homologues (Fig. 11C, 12C), l'autre sur des flancs de dents opposées que nous appellerons flancs anti-homologues, ce qui provoque évidemment une petite rotation en sens inverse des deux arbres intermédiaires 17a et 17b entraînant chacun une chaîne cinématique distincte. Selon l'état de frottement, on peut avoir une petite rotation dans les deux chaînes cinématiques, mais dans tous les cas, cette rotation en sens inverse ne peut avoir lieu que jusqu'au rattrapage de jeu total, c'est-à-dire ce que les deux chaînes cinématiques distinctes qui sont entraînées par les arbres intermédiaires 17a et 17b, viennent se bloquer, l'une sur les flancs homologues et l'autre sur les flancs anti-homologues de la roue basse vitesse.

Après le contact, si la charge axiale est augmentée, les deux chaînes cinématiques sont mises sous précontrainte suivant une valeur directement proportionnelle à l'effort axial appliqué sur l'arbre moteur.

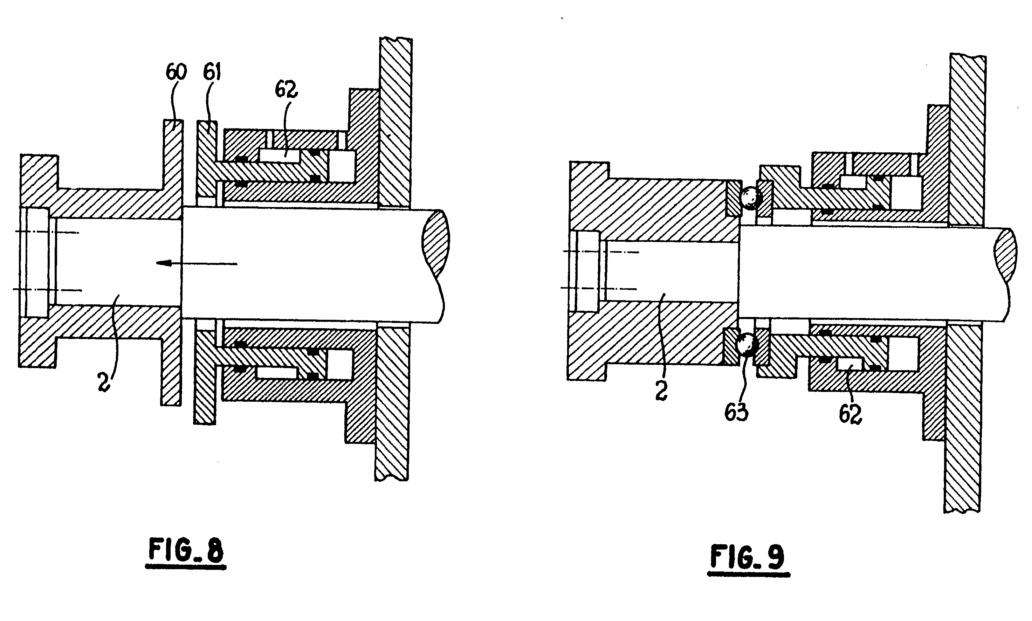

Si la charge axiale sur l'arbre moteur unique 2 est produite par un système de freinage avec rattrapage des jeux tel que représenté sur les Fig. 8, 9 et 10, on obtient une précontrainte des engrenages et un freinage avec rattrapage des jeux.

A cet effet, le système de freinage (Fig. 8) comporte, d'une part, un disque de frein 60 fixé sur l'arbre moteur unique 2 et, d'autre part, un disque de frein 61 immobilisé en rotation et actionné axialement par un vérin annulaire 62. La pression dans le vérin annulaire 62 produit, d'une part, la pression de contact sur les disques de frein 60 et 61, donc le couple de freinage sur l'arbre moteur 2, mais également le rattrapage des jeux et la mise sous précontrainte dans les différents engrenages du mécanisme.

Dans la variante représentée à la Fig. 9, les disques de freins sont remplacés sur une butée à billes 63 également actionnée axialement par le vérin annulaire 62. La précontrainte sur les dentures est également réalisée, mais dans ce cas, l'arbre moteur 2 n'est pas freiné et peut fonctionner avec les dentures sous précontrainte, donc sans jeu. Pour un fonctionnement permanent sans jeu, le vérin annulaire 62 peut être remplacé par exemple par un ressort concentrique à l'arbre grande vitesse 2.

Le réglage de la pression dans le vérin annulaire 62 permet d'obtenir une valeur de précontrainte sur les dentures homologues et anti-homologues de l'ensemble des engrenages du réducteur.

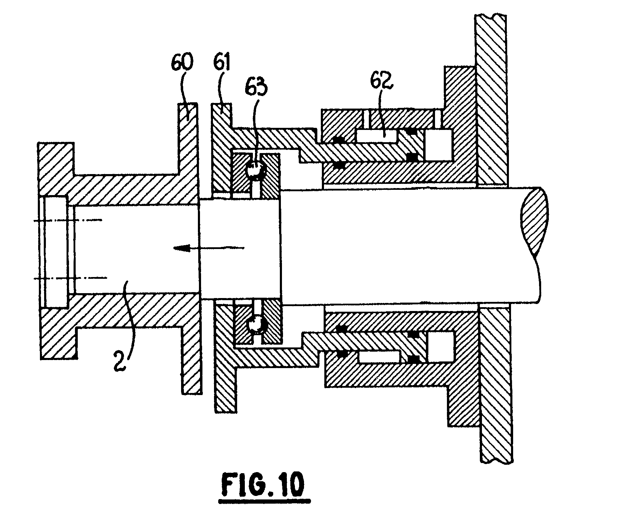

Dans la variante représentée à la Fig. 10, un disque de frein 60 est également fixé sur l'arbre moteur unique 2 et un disque de frein 61 immobilisé en rotation est actionné par le vérin annulaire 62. Une butée à billes 63 est montée sur l'arbre 2 derrière le disque de frein 61. Ainsi, avec l'adaptation du vérin annulaire 62, on obtient un fonctionnement sans jeu, avec un sens d'effort dans le vérin identique à celui de la variante représentée à la Fig. 9, et un freinage avec rattrapage de jeu avec le sens d'effort opposé identique à l'effort de la variante représenté à la Fig. 8.

La notion de rattrapage des jeux sur les différents engrenages du réducteur n'a de signification que lorsque les couples qui doivent être transmis par le mécanisme changent de sens et sont donc alternativement positifs et négatifs, la précontrainte des dentures étant évidemment liée à l'obtention d'un fonctionnement sans jeu dans les limites d'utilisation déterminées en fonction des variations maxi des couples positifs ou négatifs.

L'étude des brevets FR-A-971 083 et FR-A-2 221 981 destinés également au rattrapage de jeux des engrenages permet l'établissement de leurs diagrammes de fonctionnement montrant les variations de certains paramètres liés aux dentures en fonction des couples transmis par la couronne basse vitesse, et pour établir des comparaisons, on a représenté sur la même planche les diagrammes suivants :

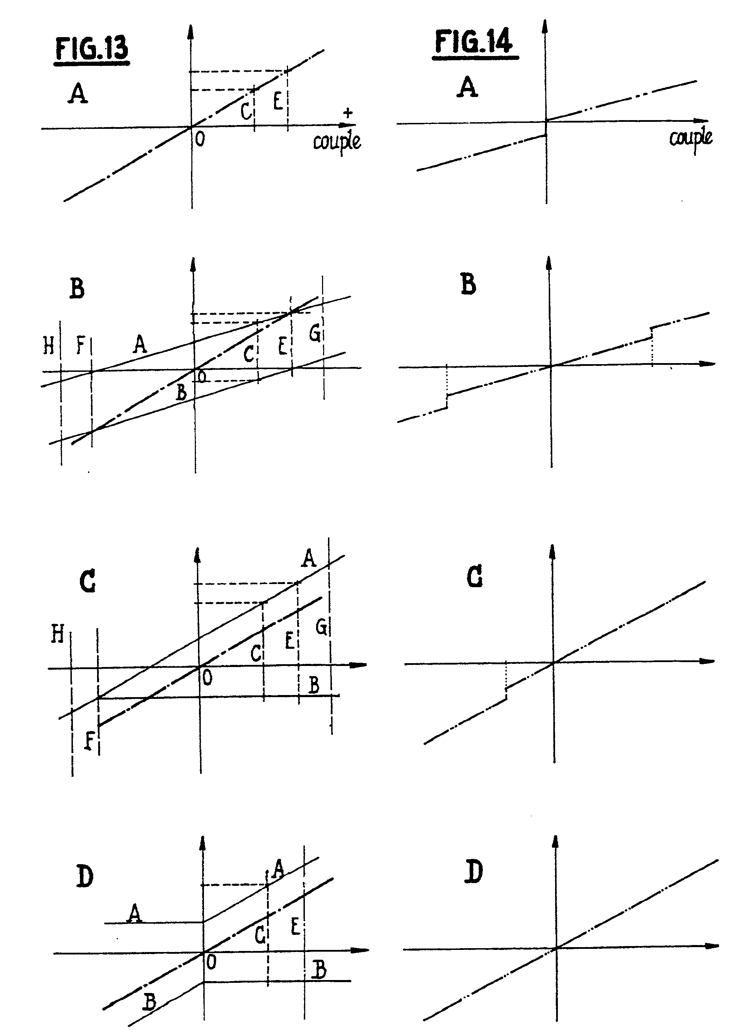

Fig. 13A et 14A : mécanisme sans rattrapage de jeux

Fig. 13B et 14B : mécanisme selon la présente invention

Fig. 13C et 14C : mécanisme selon le FR-A-971 083

Fig. 13D et 14D : mécanisme selon le FR-A-2 221 981.

Les diagrammes des Fig. 14 représentent le décalage angulaire des arbres grande vitesse et basse vitesse provoqué par l'élasticité torsionnelle de l'ensemble du mécanisme d'une part et le rattrapage des jeux à l'engrènement d'autre part, ceci en fonction des couples transmis à la roue basse vitesse. Ce décalage peut être mesuré à l'arrêt, l'arbre grande vitesse étant bloqué, et le couple étant appliqué sur la roue basse vitesse ou l'inverse. L'axe des abscisses représente le couple appliqué à la roue basse vitesse, l'axe des ordonnées représente le décalage angulaire de l'arbre grande vitesse par rapport à l'arbre basse vitesse dû à l'élasticité torsionnelle du mécanisme et au rattrapage des jeux en fonction des variations de couple.

L'examen du cas le plus simple, Fig. 14A, est celui du réducteur sans rattrapage des jeux, lorsqu'un des organes moteurs ou récepteurs est bloqué, et que l'on applique sur l'autre organe un couple qui varie et passe par une valeur zéro. Ce diagramme est formé de deux droites (Loi de Hoocke) dont les pentes sont évidemment fonction de la rigidité torsionnelle de l'ensemble du mécanisme et lorsque la valeur du couple passe par zéro (abscisse) les jeux des dentures se rattrapent, ce qui produit un décalage des deux droites.

Pour les mécanismes à rattrapage de jeux, c'est ce phénomène qu'il faut éviter dans la plage d'utilisation du mécanisme qui est définie notamment par les couples maxi positifs ou négatifs qui devront être transmis sans jeu par le mécanisme.

Les diagrammes des figures 13 représentent, pour chaque cas étudié, les variations de charge sur les dentures de la roue dentée basse vitesse en fonction de la précontrainte obtenue et de la variation du couple transmis sur la roue dentée basse vitesse.

Dans le cas de la présente invention, la précontrainte est obtenue par le vérin annulaire ou un ressort ou les deux en même temps.

L'axe des abscisses représente le couple, positif, nul ou négatif, transmis par la roue dentée basse vitesse. L'axe des ordonnées représente les efforts de contact sur les flancs homologues : partie positive, et anti-homologue : partie négative. Pour la présente invention (Fig. 13B), c'est évidemment la somme des efforts de contact de chaque groupe de deux pignons sur les flancs homologues et anti-homologues.

Pour que les comparaisons soient faciles à faire et sans équivoque possible, tous les diagrammes sont tracés avec des axes de coordonnées représentant les mêmes paramètres à la même échelle ainsi que la même précontrainte pour un couple nul sur la roue basse vitesse.

Sur la Fig. 13B, C et D, on a représenté en traits mixtes forts des lignes de pente identiques qui représentent la variation de charge sur les dentures de la Fig. 13A, ceci donne une référence de comparaison, car il est évident que pour un même couple transmis sur la roue basse vitesse, la somme algébrique des actions de contact sur les flancs homologues et anti-homologues, quelle que soit la précontrainte initiale et quel que soit le système choisi, doit être égale à la valeur de l'action de contact des dentures de la Fig. 13A à condition que la roue dentée basse vitesse des mécanismes considérés soit de même diamètre primitif.

Si l'on trace sur les diagrammes des Fig. 13 une ligne verticale C parallèle à l'axe des ordonnées, passant par une même valeur du couple extérieur transmis sur la roue basse vitesse, les deux valeurs de charge sur les flancs de dentures homologues et antihomologue sont définies par les deux lignes en traits pointillés, parallèles à l'axe des abscisses.

En comparant les diagrammes 13B et 14B selon la présente invention et les diagrammes 13C et 14C selon le FR-A-971 083, on voit que la pente de la ligne A des diagrammes 13B est deux fois moins importante que sur le diagramme 13C. Ceci vient du fait que sur le diagramme 13B, la précontrainte sur flanc anti-homologue diminue lorsque le couple positif augmente, alors que sur le diagramme 13C, la précontrainte reste constante.

Si l'on trace sur la Figure 13B une ligne E représentant la valeur limite de fonctionnement sans jeu sous le couple positif et une ligne identique sur les Figures 13A et C, on constate que l'action de contact sur les flancs homologues de la Fig. 13B est égale à celle de la Figure 13A, alors que sur la Fig. 13C cette valeur est égale à celle de la Fig. 13A plus la précontrainte, ce qui pour un appareil répondant au même cahier des charges, demande une augmentation très importante de son dimensionnement.

Si l'on trace sur la Fig. 13B une ligne F correspondant à la valeur limite de fonctionnement sans jeux sous couple négatif et la même ligne sur la Fig. 13C, on constate que sur la Fig. 13C le fonctionnement sans jeux ne peut avoir lieu que pour une valeur moitié du couple de celle obtenue sur le dispositif selon la présente invention représenté par les Fig. 13B et 14B.

Si l'on trace deux lignes G et H correspondant respectivement à des couples positifs et négatifs dépassant les valeurs limites de fonctionnement sans jeux, on constate que sur la Fig. 13B tous les engrenages participent à l'entraînement de la roue dentée basse vitesse, leurs contacts étant tous sur les mêmes flancs de dents, alors que sur la Fig. 13C, côté couple positif, une seule chaîne cinématique contribue à l'entraînement de la roue dentée basse vitesse. Si l'on examine la partie, côté couple négatif de la Fig. 13C, les mêmes flancs de dents participent à l'entraînement à partir d'une valeur de couple négatif, deux fois plus faible que sur la Fig. 13B.

Cette caractéristique est très importante, car pour certains mécanismes d'entraînement, par exemple de radars, où l'utilisation en "survie" signifie que la parabole d'antenne est givrée et que la vitesse du vent est très élevée, ce qui produit des couples de fonctionnement momentanés très importants qu'il est absolument indispensable de pouvoir transmettre pour assurer la sauvegarde de l'appareil (Aubanage).

Cette dernière caractéristique est très appréciable pour ce type de matériel. D'autre part, il est évident que compte tenu des caractéristiques non symétriques pour les deux sens de couple transmis, tel que le montre la Fig. 13C, le mécanisme relatif à cette figure ne peut être utilisé que pour des réalisations de très faibles capacités de charges.

Les différences essentielles de fonctionnement qui viennent d'être décrites entre la présente invention et le brevet FR-A-971 083 sont dues, d'une part, à la précontrainte axiale de l'arbre grande vitesse de la présente invention qui est réalisée sur l'ensemble de l'arbre grande vitesse et non sur un seul pignon comme dans le FR-A-971 083 et, d'autre part, à l'élément produisant la précontrainte constitué par un vérin annulaire ou un ressort, qui prend appui sur le carter (partie fixe) pour la présente invention et non sur un épaulement de l'arbre comme dans le FR-A-971 083.

En ce qui concerne la comparaison entre la présente invention et le FR-A-2 221 981 (Fig. 13D et 14D) les différences essentielles sont les mêmes que celles indiquées précédemment.

De plus, dans le FR-A-2 221 981, quelle que soit la valeur du couple transmis, il n'y a toujours qu'une chaîne cinématique qui contribue à l'entraînement de la roue dentée basse vitesse. D'autre part, le mécanisme suivant ce brevet nécessite un montage plus compliqué et notamment l'utilisation de deux moteurs pour son entraînement.

## Revendications

1. Réducteur à couple divisé et avec équilibrage des couples comportant un arbre moteur d'entrée unique (2) et une roue de sortie (3) dentée à basse vitesse montée sur un arbre de sortie parallèle ou orthogonal audit arbre d'entrée et entraînée par des systèmes de division de puissance, lesdits systèmes comprenant des engrenages avec quatre pignons (4, 5, 6, 7) disposés dans un carter principal (1) et en prise avec ladite roue de sortie (3), caractérisé en ce que les quatre pignons (4, 5, 6, 7) sont en prise perpétuelle avec ladite roue de sortie (3), les engrenages et les quatre pignons (4, 5, 6, 7) sont divisés en deux groupes identiques avec deux pignons desdits quatre pignons, l'un des deux pignons (4, 6) de chaque groupe étant entraîné par un porte-satellites (12a, 12b) d'un mécanisme à planétaire et l'autre (5, 7) desdits deux pignons étant entraîné par une couronne dentée (19a, 19b) dudit mécanisme à planétaire par l'intermédiaire d'une roue dentée (24a, 24b) ce qui constitue un premier desdits systèmes de division de puissance, chacun desdits mécanismes à planétaire comportant un pignon solaire (16a, 16b) solidaire d'un arbre intermédiaire (17a, 17b) relié chacun à l'arbre moteur d'entrée unique (2) par un second desdits systèmes de division de puissance.

2. Réducteur selon la revendication 1, caractérisé en ce que l'arbre moteur d'entrée unique (2) est libre axialement et comporte un mécanisme (61, 62) de freinage avec rattrapage des jeux et mise sous précontrainte de l'ensemble des engrenages du réducteur.

3. Réducteur selon la revendication 1, caractérisé en ce que l'arbre moteur d'entrée unique (2) est libre axialement et comporte un mécanisme (62, 63) à fonctionnement momentané ou continu avec rattrapage des jeux et mise sous précontrainte de l'ensemble des engrenages du réducteur.

4. Réducteur selon la revendication 1, caractérisé en ce que les arbres intermédiaires (17a, 17b) sont disposés dans le même plan de joint du carter principal (1) pour une disposition parallèle des arbres d'entrée (2) et de sortie (3).

5. Réducteur selon la revendication 1, caractérisé en ce que les arbres intermédiaires (17a, 17b) sont disposés dans deux plans de joint différents du carter principal (1) pour une disposition orthogonale des arbres d'entrée (2) et de sortie (3).

6. Réducteur selon les revendications 1 et 4, caractérisé en ce que, pour une disposition parallèle des arbres d'entrée (2) et de sortie (3), le second système de division de puissance est constitué par deux pignons (33, 34) possédant une denture a hélice respectivement a gauche et a droite, montés sur l'arbre d'entrée (2) et engrénant chacun avec une roue a denture hélicoïdale (35, 36) solidaire respectivement de l'arbre intermédiaire (17a) et de l'arbre intermédiaire (17b).

7. Réducteur selon les revendications 1 et 5, caractérisé en ce que, pour une disposition orthogonale des arbres d'entrée (2) et de sortie (3), le second système de division de puissance est constitué par deux vis sans fin (50, 51) possédant une hélice respectivement à droite et à gauche, montées sur l'arbre d'entrée (2) et engrénant chacune avec une roue tangente (52, 53) solidaire respectivement de l'arbre intermédiaire (17a) et de l'arbre intermédiaire (17b).

8. Réducteur selon la revendication 2, caractérisé en ce que le mécanisme de freinage avec rattrapage des jeux et mise sous précontrainte de l'ensemble des engrenages du réducteur est constitué par un premier disque de frein (60) fixe sur l'arbre moteur d'entrée (2) et par un second disque de frein (61) immobilisé en rotation et actionne, par exemple, par un vérin annulaire (62).

9. Réducteur selon la revendication 3, caractérisé en ce que le mécanisme à fonctionnement momentané ou continu avec rattrapage des jeux et mise sous précontrainte de l'ensemble des engrenages du réducteur est constitue par une butée à bille (63) montée sur l'arbre d'entrée (2) et actionnée, par exemple, par un vérin annulaire (62).

10. Réducteur selon les revendications 2 et 3, caractérisé en ce que le mécanisme de freinage et à fonctionnement momentané ou continu avec rattrapage des jeux et mise sous précontrainte de l'ensemble des engrenages du réducteur est constitue par un premier disque de frein (60) fixe sur l'arbre moteur d'entrée (2) et par un second disque de frein (61) immobilisé en rotation, actionné par un vérin hydraulique annulaire (62) et coopérant avec une butée a billes (63) montée sur ledit arbre moteur d'entrée (2) de façon à obtenir dans un sens de blocage du vérin annulaire (62) le rattrapage des jeux et dans l'autre sens le freinage.

11. Réducteur selon les revendications 2 et 3, caractérisé en ce que le réglage de la pression dans le vérin annulaire (62) permet d'obtenir une valeur de précontrainte sur les dentures homologues et antihomologues de l'ensemble des engrenages du réducteur.

12. Réducteur selon l'une des revendications précédentes, caractérisé en ce que, pour les couples maximum transmis avec rattrapage de jeux, les précontraintes sur les flancs opposés a l'entraînement ne se rajoute pas au flanc de dent d'entraînement.

**Patentansprüche**

1. Untersetzungsgetriebe mit Leistungsverzweigung und Drehmomentausgleich, mit einer einzigen Antriebs-Eingangswelle (2) und einem Niederdrehzahl-Ausgangszahnrad (3), das auf einer parallel oder rechtwinklig zur der Eingangswelle verlaufenden Ausgangswelle montiert ist und durch Leistungsverzweigungssysteme angetrieben wird, welche Leistungsverzweigungssysteme Getriebe mit vier Ritzeln (4, 5, 6, 7) aufweisen, die in einem Hauptgehäuse (1) angeordnet sind und mit dem Ausgangszahnrad (3) in Eingriff stehen, dadurch **gekennzeichnet**, daß die vier Ritzel (4, 5, 6, 7) in ständigem Eingriff mit dem Ausgangszahnrad (3) stehen, daß die Getriebe und die vier Ritzel (4, 5, 6, 7) unterteilt sind in zwei identische Gruppen mit je zweien der vier Ritzel, wobei eines der beiden Ritzel (4, 6) jeder Gruppe durch einen Planetenträger (12a, 12b) eines Planetengetriebes angetrieben wird und das andere (5, 7) der beiden Ritzel über ein Zahnrad (24a, 24b), das ein erstes der Leistungsverzweigungssystem bildet, durch ein gezahntes Hohlrad (19a, 19b) des Planetengetriebes angetrieben wird und wobei die Planetengetriebe ein Sonnenrad (16a, 16b) aufweisen, das einstückig mit einer Zwischenwelle (17a, 17b) ausgebildet ist, die jeweils über ein zweites der Leistungsverzweigungssysteme mit der einzigen Antriebs-Eingangswelle (2) verbunden ist.

2. Untersetzungsgetriebe nach Anspruch 1, dadurch **gekennzeichnet**, daß die einzige Antriebs-Eingangswelle (2) in Axialrichtung frei ist und einen Bremsmechanismus (61, 62) mit Spielbeseitigung und Vorspannung des gesamten Räderwerks des Untersetzungsgetriebes aufweist.

3. Untersetzungsgetriebe nach Anspruch 1, dadurch **gekennzeichnet**, daß die einzige Antriebs-Eingangswelle (2) in Axialrichtung frei ist und einen momentan oder kontinuierlich wirkenden Mechanismus (62, 63) mit Spielbeseitigung und Vorspannung des gesamten Räderwerkes des Untersetzungsgetriebes aufweist.

4. Untersetzungsgetriebe nach Anspruch 1, dadurch **gekennzeichnet**, daß bei paralleler Anordnung der Eingangswelle (2) und der Ausgangswelle (3) die Zwischenwellen (17a, 17b) in der selben Teilungsebene des Hauptgehäuses (1) angeordnet sind.

5. Untersetzungsgetriebe nach Anspruch 1, dadurch **gekennzeichnet**, daß bei rechtwinkliger Anordnung der Eingangswelle (2) und der Ausgangswelle (3) die Zwischenwellen (17a, 17b) in zwei verschiedenen Teilungsebenen des Hauptgehäuses (1) angeordnet sind.

6. Untersetzungsgetriebe nach den Ansprüchen 1 und 4, dadurch **gekennzeichnet**, daß bei paralleler Anordnung der Eingangswelle (2) und der Ausgangswelle (3) das zweite Leistungsverzweigungssystem durch zwei Ritzel (33, 34) gebildet wird, die eine Rechts- bzw. Links-Schraubenverzahnung aufweisen und die auf der Eingangswelle (2) montiert sind und jeweils mit einem Schraubenzahnrad (35, 36) kämmen, das einstückig mit der Zwischenwelle (17a) bzw. der Zwischenwelle (17b) ausgebildet ist.

7. Untersetzungsgetriebe nach den Ansprüchen 1 und 5, dadurch **gekennzeichnet**, daß bei rechtwinkliger Anordnung der Eingangswelle (2) und der Ausgangswelle (3) das zweite Leistungsverzweigungssystem durch zwei Schnecken (50, 51) mit rechts- bzw. linkshändigen Schraubengängen gebildet wird, die auf der Eingangswelle (2) montiert sind und jeweils mit einem Schneckenrad (52, 53) kämmen, das einstückig mit der Zwischenwelle (17a) bzw. der Zwischenwelle (17b) ausgebildet ist.

8. Untersetzungsgetriebe nach Anspruch 2, dadurch **gekennzeichnet**, daß der Bremsmechanismus mit Spielbeseitigung und Vorspannung des Räderwerkes des Untersetzungsgetriebes gebildet wird durch eine auf der Antriebs-Eingangswelle (2) fixierte erste Bremsscheibe (60) und eine drehfest angeordnete zweite Bremsscheibe (61), die beispielsweise durch einen ringförmigen Zylinder (62) betätigt wird.

9. Untersetzungsgetriebe nach Anspruch 3, dadurch **gekennzeichnet**, daß der momentan oder ständig wirkende Mechanismus mit Spielbeseitigung und Vorspannung des gesamten Räderwerkes des Untersetzungsgetriebes gebildet wird durch ein Druck-Kugellager (63), das auf der Eingangswelle (2) montiert ist und beispielsweise durch einen ringförmigen Zylinder (62) betätigt wird.

10. Untersetzungsgetriebe nach den Ansprüchen 2 und 3, dadurch **gekennzeichnet**, daß der Bremsmechanismus und der momentan oder kontinuierlich wirkende Mechanismus zur Spielbeseitigung und Vorspannung des gesamten Räderwerkes des Untersetzungsgetriebes gebildet werden durch eine erste Bremsscheibe (60), die auf der Antriebs-Eingangswelle (2) montiert ist, und eine drehfest gehaltene zweite Bremsscheibe (61), die durch einen ringförmigen Hydraulikzylinder (62) betätigbar ist und mit einem auf der Antriebs-Eingangswelle (2) montierten Druck-Kugellager (63) zusammenwirkt, so daß sich in einem Sperrsinn des ringförmigen Zylinders (62) die Spielbeseitigung und im anderen Sinne die Bremswirkung ergibt.

11. Untersetzungsgetriebe nach den Ansprüchen 2 und 3, dadurch **gekennzeichnet**, daß es die Regelung des Druckes in dem ringförmigen Zylinder (62) gestattet, einen Wert der Vorspannung an den homologen und antihomologen Verzahnungen des Räderwerks des Untersetzungsgetriebes zu erhalten.

12. Untersetzungsgetriebe nach einem der vorstehenden Ansprüche, dadurch **gekennzeichnet**, daß für die maximalen Drehmomente, die mit Spielbeseitigung übertragen werden, die Vorspannungen auf den der Antriebsrichtung entgegengesetzten Flanken sich nicht auf der Antriebszahnflanke hinzuaddieren.

**Claims**

1. Reduction unit with torque division and with equalisation of the torques, comprising a single driving input shaft (2) and a low-speed output gear wheel (3) mounted on an output shaft parallel or orthogonal to the said input shaft and driven by power-division systems, the said systems comprising gears with four pinions (4, 5, 6, 7) arranged in a principal casing (1) and in mesh with the said output wheel (3), characterised in that the four pinions (4, 5, 6, 7) are in constant mesh with the said output wheel (3), the gears and the four pinions (4, 5, 6, 7) are divided into two identical groups with two pinions of the said four pinions, one of the two pinions (4, 6) of each group being driven by a planet carrier (12a, 12b) of a planetary mechanism and the other (5, 7) of the said two pinions being driven by an annular gear (19a, 19b) of the said planetary mechanism via a gear wheel (24a, 24b), forming a first of the said power-division systems, each of the said planetary mechanisms comprising a sun pinion (16a, 16b) integral with an intermediate shaft (17a, 17b) each connected to the single driving input shaft (2) by a second of the said power-division systems.

2. Reduction unit according to Claim 1, characterised in that the single driving input shaft (2) is axially free and comprises a mechanism (61, 62) for braking with take-up of the backlash and prestressing of the gears of the reduction unit as a whole.

3. Reduction unit according to Claim 1, characterised in that the single driving input shaft (2) is axially free and comprises a mechanism (62, 63) for momentary or continuous operation with take-up of the backlash and prestressing of the gears of the reduction unit as a whole.

4. Reduction unit according to Claim 1, characterised in that the intermediate shafts (17a, 17b) are arranged in the same parting line of the principal casing (1) for a parallel arrangement of the input (2) and output (3) shafts.

5. Reduction unit according to Claim 1, characterised in that the intermediate shafts (17a, 17b) are arranged in two different parting lines of the principal casing (1) for an orthogonal arrangement of the input (2) and output (3) shafts.

6. Reduction unit according to Claims 1 and 4, characterised in that for a parallel arrangement of the input (2) and output (3) shafts, the second power-division system is formed by two pinions (33, 34) having a left-handed and right-handed helical toothing respectively, mounted on the input shaft (2) and each meshing with a helical gear (35, 36) integral with the intermediate shaft (17a) and the intermediate shaft (17b).

7. Reduction unit according to Claims 1 and 5, characterised in that, for an orthogonal arrangement of the input (2) and output (3) shafts, the second power-division system is formed by two worms (50, 51) having a right-handed and a left-handed helix respectively, mounted on the input shaft (2) and each meshing with a worm wheel (52, 53) integral with the intermediate shaft (17a) and the intermediate shaft (17b) respectively.

8. Reduction unit according to Claim 2, characterised in that the mechanism for braking with take-up of the backlash and prestressing of the gears of the reduction unit as a whole is formed by a first brake disc (60) fixed on the driving input shaft (2) and by a second brake disc (61) immobilised in terms of rotation and actuated, for example, by an annular jack (62).

9. Reduction unit according to Claim 3, characterised in that the mechanism for momentary or continuous operation with take-up of the backlash and prestressing of the gears of the reduction unit as a whole is formed by a ball thrust bearing (63) mounted on the input shaft (2) and actuated, for example, by an annular jack (62).

10. Reduction unit according to Claims 2 and 3, characterised in that the mechanism for braking and for momentary or continuous operation with take-up of the backlash and prestressing of the gears of the reduction unit as a whole is formed by a first brake disc (60) fixed on the driving input shaft (2) and by a second brake disc (61) immobilised in terms of rotation, actuated by an annular hydrauliq jack (62) and cooperating with a ball thrust bearing (63) mounted on the said driving input shaft (2) in such a way as to obtain the take-up of the backlash in a locking direction of the annular jack (62) and braking in the other direction.

11. Reduction unit according to Claims 2 and 3, characterised in that the adjustment of the pressure in the annular jack (62) makes it possible to obtain a prestress value on the corresponding and opposite toothings of the gears of the reduction unit as a whole.

12. Reduction unit according to one of the preceding claims, characterised in that, for the maximum torques transmitted with take-up of backlash, the prestresses on the flanks opposed to driving is not added to the driving tooth flank.

## FIG.1

## FIG.2

FIG.3

FIG.4

## FIG.5

## FIG.6

# FIG. 7

FIG. 8

FIG. 9

**FIG.10**

# FIG.11

# FIG.12

**FIG.13**

A

couple

B

H F A C E G B O

C

H A C E G O B F

D

A A C E O B B

**FIG.14**

A

couple

B

C

D